# EUROPÄISCHE PATENTANMELDUNG

(11) **EP 0 822 637 A2**
(43) Veröffentlichungstag der Anmeldung: **04.02.1998**
(21) Anmeldenummer: 97112464.9
(22) Anmeldetag: 21.07.1997
(51) Int. Cl.: H02J 13/00

(54) **Schaltgerät für Hoch- oder Mittelspannung**

(30) Priorität: 29.07.1996 DE 19630613
(71) Anmelder: SIEMENS AKTIENGESELLSCHAFT, 80333 München (DE)
(72) Erfinder: Linnert, Uwe, Dr., 90766 Fürth (DE)

(57) **Zusammenfassung**

Um bei einem Schaltgerät (1a bis 1f) für Hoch- oder Mittelspannung eine praktikable Lösung für eine Übertragung von Daten und einer Versorgungsspannung zu bieten, ist vorgesehen, daß hierzu eine Eigenbedarfsleitung (10,12) dient, an die die Heizeinrichtung (9) des Schaltgeräts (1a bis 1f) angeschlossen ist. Zusätzlich ist eine redundante Ausführung über eine weitere Eigenbedarfsleitung möglich.

## Beschreibung

Die Erfindung betrifft ein Schaltgerät für Hoch- oder Mittelspannung.

Schaltgeräte in der Hoch- oder Mittelspannungstechnik werden in der Regel über konkrete Steuerleitungen angesteuert, die beispielsweise einer sogenannten "Leittechnik für Schaltanlagen " zugehören können. In dem Aufsatz "Neue Leittechnik für Schaltanlagen durch Einsatz von Mikrorechnern" aus ETG-Fachberichte Nr. 14, Titel:" Mikroelektronik in der Energietechnik", Seiten 22 bis 31, sind hierzu verschiedenste Leitungskonfigurationen beispielhaft beschrieben.

Dabei ist jedem Abzweig einer Schaltanlage jeweils ein Abzweiggerät zugeordnet, das über eine Eigenbedarfsspannungsversorgung der Anlage mit Energie versorgt ist und über eine parallele Verdrahtung mit den Schaltgeräten verbunden ist.

Aus der EP-0 355 532 B1 ist eine Anordnung zum Übertragen von Daten und einer Versorgungsspannung (Gleichspannung) über eine Busleitung bekannt, wobei eine Anwendung in der Verfahrens- und Prozeßtechnik vorgesehen ist. Dabei können räumlich voneinander entfernt liegende Feldgeräte eigensicher und explosionsgeschützt mit geringem Aufwand an eine entfernte Zentrale angeschlossen werden. Als Busleitung kann dabei bevorzugt eine Spannungsversorgungsleitung in der jeweiligen Anlage dienen. Aus der DE 39 07 652 A1 ist prinzipiell ebenfalls die Übertragung von Daten und Energie über eine gemeinsame Leitung bekannt.

Derartige Versorgungsleitungen sind jedoch in der Regel von Fehlern und Spannungseinbrüchen betroffen, so daß in sicherheitstechnischen Anlagen eine zuverlässige Datenübertragung zwischen den jeweiligen Geräten nicht unbedingt gewährleistet ist. Dies ist insbesondere bei der Anwendung in Schaltanlagen zur Energieversorgung kritisch, bei denen noch zusätzlich die Problematik der elektromagnetischen Beeinflussung besteht.

In der älteren deutschen Patentanmeldung 195 20 596.0 wurde bereits vorgeschlagen, bei Schaltanlagen eine redundante Informationsübertragung über eine Hilfsspannungsversorgung vorzusehen. Ein redundantes Bussystem mit automatischer Umschaltung ist aus "Signal und Draht", 1993, Titel "Automatisches Umschalten zweier eigensicherer Datenübertragungskanäle", Seiten 10 bis 14, bekannt.

Der Erfindung liegt die Aufgabe zugrunde, eine einfache praktikable Lösung für eine Übertragung von Daten und einer Versorgungsspannung bei einem Schaltgerät für Hoch- oder Mittelspannung anzugeben, wobei eine hohe Ausfallsicherheit gegeben sein soll.

Die Aufgabe wird erfindungsgemäß gelost mit einem Schaltgerät für Hoch- oder Mittelspannung mit einem Antriebsmittel, welches über ein Steuerglied ansteuerbar ist und zur Betätigung eines Schalters zum Schalten der Hoch- oder Mittelspannung dient, einer Heizeinrichtung, welche von einer ersten Eigenbedarfsleitung mit elektrischer Energie versorgt ist, und einer mit dem Steuerglied verbundenen Steuereinrichtung, welche zum Ansteuern des Steuergliedes dient und eine erste Schnittstelle für eine Busleitung aufweist, wobei die Eigenbedarfsleitung gleichzeitig als Busleitung für die Informationsübertragung von oder zur Steuereinrichtung dient.

Auf diese Weise ist ein Schaltgerät gegeben, mit dem auf einfache Art und Weise eine Schaltanlage aufgebaut werden kann, bei der keine zusätzlichen Steuerleitungen nötig sind. Mit dem Anschluß des Schaltgerätes an die Eigenbedarfsversorgung wird gleichzeitig die Verbindung für eine Kommunikation oder Datenübertragung hergestellt. Es kann hier also von einem "Eigenbedarfsbus" gesprochen werden. Dabei kommt der Eigenbedarfsleitung der Heizeinrichtung eine völlig neue Bedeutung zu. Die Art der Spannung ist dabei beliebig.

Mit Vorteil weist die Steuereinrichtung eine zweite Schnittstelle für eine redundante Informationsübertragung auf. Auf diese Weise kann bei einer Störung eines Übertragungssystems die Funktion durch Umschalten oder durch eine parallele Kommunikation aufrechterhalten werden. Dabei ist eine hohe Betriebssicherheit des Schaltgerätes gegeben, wobei gleichzeitig sicherheitstechnischen Bedenken Rechnung getragen werden.

Vorteilhafterweise weist die Steuereinrichtung eine Überwachungs- und/oder Umschalteinrichtung zur Aktivierung einer Informationsübertragung mit oder zwischen den beiden Schnittstellen auf. Dadurch ist bei einem Ausfall eines Systems oder eines Übertragungskanals ein unterbrechungsfreier Betrieb des Schaltgeräts gewährleistet.

Die zweite Schnittstelle kann zum Anschluß an eine elektrische Steuer- oder eine weitere als Busleitung dienende Eigenbedarfsleitung ausgebildet sein. Auch ist alternativ eine Ausbildung der zweiten Schnittstelle als optische Schnittstelle für eine optische Datenübertragung möglich. Die zweite Schnittstelle kann auch ein Koppelelement für eine drahtlose Datenübertragung umfassen, das beispielsweise als Funkantenne, Schall- oder Ultraschallkoppler ausgebildet sein kann. Damit sind verschiedenste Arten einer redundanten Kommunikation möglich, wobei den jeweiligen anlagenspezifischen Gesichtspunkten Rechnung getragen werden kann. Dabei kann je nach Bedarf eine leitungsgebundene oder drahtlose Übertragung oder eine gemischte Ausführung gewählt werden.

Die Eigenbedarfsleitung/en und/oder die Steuer- oder Busleitung können wahlweise von einer Gleich- oder Wechselspannungsquelle mit Energie versorgt sein. Das Schaltgerät kann damit den jeweiligen Anlagenbedürfnissen angepaßt werden. Dies ist insbesondere für eine Nachrüstung in einer Anlage, bei der Steuer- oder Busleitungen vorgegeben sind, von Interesse.

Bevorzugt ist der Schalter als Trennungs- oder Erdungsschalter ausgebildet. Diese Schalter sind in ihrem Betriebsverhalten und in ihrer Betriebsfunktion nicht zeitkritisch, so daß ein kurzzeitiger Ausfall oder eine Übertragungsstörung oder auch eine langsame Datenübertragungsrate gegenüber der eines Leistungsschalters nicht problematisch ist oder sind.

Ausführungsbeispiele der Erfindung, weitere Vorteile und Details werden nachfolgend anhand der Zeichnung beispielhaft näher erläutert. Es zeigen:
- FIG 1: ein erstes Schaltgerät in einer Prinzipdarstellung,
- FIG 2: ein alternatives Schaltgerät und
- FIG 3: eine Prinzipdarstellung einer Anordnung mit mehreren Schaltgeräten und der dazugehörigen Informationsübertragung.

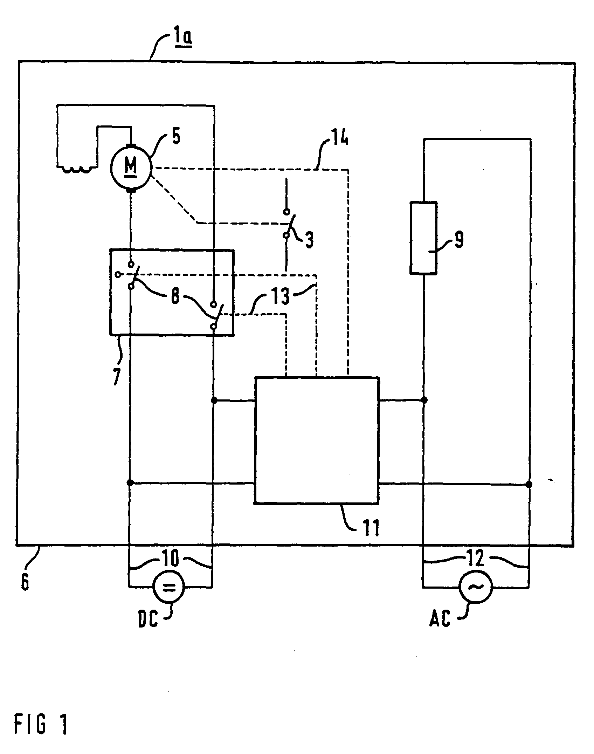

FIG 1 zeigt ein Schaltgerät 1a für Hoch- oder Mittelspannung in einer Prinzipdarstellung. Zum Schalten der Hoch- oder Mittelspannung weist das Schaltgerät 1a einen Schalter 3 auf, der von einem Antriebsmittel mechanisch betätigbar ist. Als Antriebsmittel ist vorliegend ein Gleichstrommotor 5 vorgesehen. Dieser kann beispielhaft wie gezeigt als Gleichstrom-Reihenschlußmotor ausgebildet sein.

Der Gleichstrommotor 5 ist über ein Steuerglied 7 ansteuerbar, welches beispielhaft zwei Schaltkontakte 8 umfaßt. Selbstverständlich sind auch kontaktlose Steuermittel, z.B. steuerbare Ventile oder Halbleiter einsetzbar. Das Steuerglied 7 kann für einen Notbetrieb gegebenenfalls auch über einen nicht näher gezeigten Handkurbelantrieb betätigt werden.

Das Steuerglied 7 verbindet dabei den Gleichstrommotor 5 mit den Eigenbedarfsleitungen ( Leitungen 10) einer Eigenbedarfsversorgung, die das Schaltgerät 1a mit einer Gleichstromquelle DC verbindet. Auf diese Weise ist der Gleichstrommotor 5 mit elektrischer Energie versorgt.

Zur Verhinderung von Schwitzwasser ist im Gehäuse 6 des Schaltgerätes 1a eine Heizeinrichtung, insbesondere ein Heizwiderstand 9, angeordnet, der ebenfalls mit einer zugeordneten Energiequelle, vorliegend beispielhaft eine Wechselspannungsquelle AC, über Eigenbedarfsleitungen (Leitungen 12) verbunden ist.

Zum Ansteuern des Steuergliedes 7 ist eine Steuereinrichtung 11 vorgesehen, die in Wirkverbindung (Verbindungslinien 13) mit den Schaltkontakten 8 steht. Gegebenenfalls kann auch eine zusätzliche Steuerleitung 14 mit zur Aufnahme einer Meldung, insbesondere einer Stellungsmeldung, des Gleichstrommotors 5 vorgesehen sein, die an einen nicht näher gezeigten Eingang der Steuereinrichtung 11 gelegt ist.

Die gezeigte Steuereinrichtung 11 erhält ihre Versorgungsspannung wahlweise aus einem der gezeigten Eigenbedarfsysteme. Die Versorgung kann dabei alternativ einzeln oder redundant ausgeführt sein.

Wesentlich für diese Ausführungsform ist, daß eine redundante Datenübertragung von einer nicht näher gezeigten Zentrale zur Steuereinrichtung 11 redundant über die beiden Eigenbedarfsysteme erfolgt. Die Eigenbedarfsleitungen erhalten also eine weitere Funktion und können daher sozusagen als "Eigenbedarfsbus" bezeichnet werden.

Dabei kann je nach Art des Eigenbedarfsystems (Gleich- oder Wechselspannung), eine unterschiedliche Übertragungsmethode der Informationen zur Anwendung kommen. Günstig ist dabei, daß keine zusätzlichen Steuerleitungen innerhalb einer Anlage verlegt werden müssen. Es wird also das bestehende Energieversorgungsnetz für die jeweiligen Schaltgeräte zur Datenübertragung verwendet. Derartige Energieversorgungsnetze sind für sich gesehen nur für relativ niedrige Übertragungsraten (bis ca. 10 kBaud) geeignet. Ggf. können zukünftig durch verbesserte Übertragungstechniken wesentlich höhere Übertragungsraten (ca. 10 x höher) erzielt werden.

Prinzipiell ist es günstig, wenn der Schalter 3 als Trennungs- oder Erdungsschalter ausgebildet ist. Derartige Schalter werden im regulären Betrieb nicht zeitkritisch eingesetzt, so daß eine Informationsübertragung mit einer relativ langsamen Übertragungsgeschwindigkeit nicht von Nachteil ist.

Die Steuereinrichtung 11 kann selbstverständlich mit einem Mikroprozessor ausgestattet sein, so daß eine digitale Signal- und Datenverarbeitung gegeben ist. Die Kommunikation mit der Zentrale kann dabei in beide Richtungen, also für Befehls- und Melderichtung erfolgen.

Je nach Ausbildung des jeweiligen Eigenbedarfssystems kann eines bevorzugt zur Anwendung kommen, wobei dann das jeweils andere als Backup-System im Fehlerfall zur Verfügung steht. Denkbar sind auch Varianten, bei denen die Kommunikation über beide Systeme gleichzeitig erfolgt und lediglich bei Differenzen der Datenübertragung eine Fehlerbestimmung oder logische Entscheidung für die korrekte Information getroffen wird. Hierzu sind Auswahlkriterien wie in der obengenannten älteren Anmeldung denkbar.

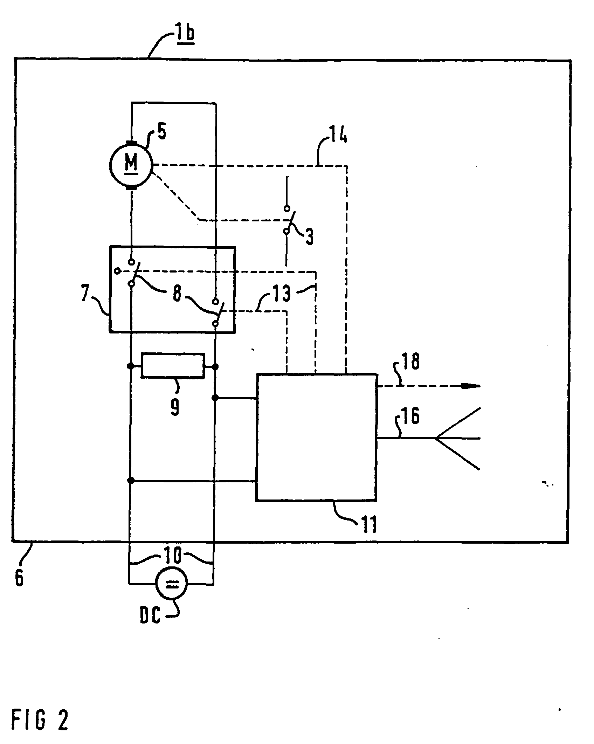

FIG 2 zeigt ein weiteres Ausführungsbeispiel mit einem Schaltgerät 1b, bei dem die Energieversorgung für den Heizwiderstand 9 und für die übrigen Komponenten des Schaltgerätes 1b von einem gemeinsamen ersten Eigenbedarfssystem versorgt werden. Dieses kann wahlweise von einer Gleich- oder Wechselspannungsquelle versorgt sein. Vorliegend ist beispielhaft eine Gleichspannungsquelle DC vorgesehen. Dieses Ausführungsbeispiel gilt zunächst für eine Ausführung ohne Redundanz für die Kommunikation mit einer Zentrale.

Zusätzlich kann die Steuereinrichtung 11 für die Redundanz wahlweise eine zweite Schnittstelle aufweisen. Dazu ist vorliegend ein Koppelelement 16 gezeigt. Dieses kann beispielsweise für eine drahtlose Datenübertragung dienen. Es kann dabei zum Beispiel als Funk-, Opto-, Schall- oder Ultraschallkoppler ausgebildet sein. Auf diese Weise ist eine drahtlose Kommunikation oder Datenübertragung möglich. Diese Ausführung ist dann günstig, wenn bei einer Nachrüstung in einer Anlage mit nur einem Eigenbedarfssystem eine redundante Datenübertragung erfolgen soll. Auf diese Weise ist ein nachträglicher Verdrahtungsaufwand nicht erforderlich.

Selbstverständlich kann die zweite Schnittstelle auch zum Anschluß an eine elektrische Steuer- oder eine weitere Eigenbedarfsleitung ausgebildet sein. Dazu ist rein beispielhaft der strichlierte Pfeil 18 in der FIG 2 gezeigt.

Es ist selbstverständlich, daß die gezeigten Steuereinrichtungen 11 weitere zusätzliche Ein- und Ausgänge für die Verarbeitung von Meldungen und Befehle aufweisen, die im Rahmen üblichen Datenverarbeitung in einer Schaltanlage auftreten können. Hierzu gehören auch Meßwerte, die als analoge Spannungsgrößen eingegeben werden können.

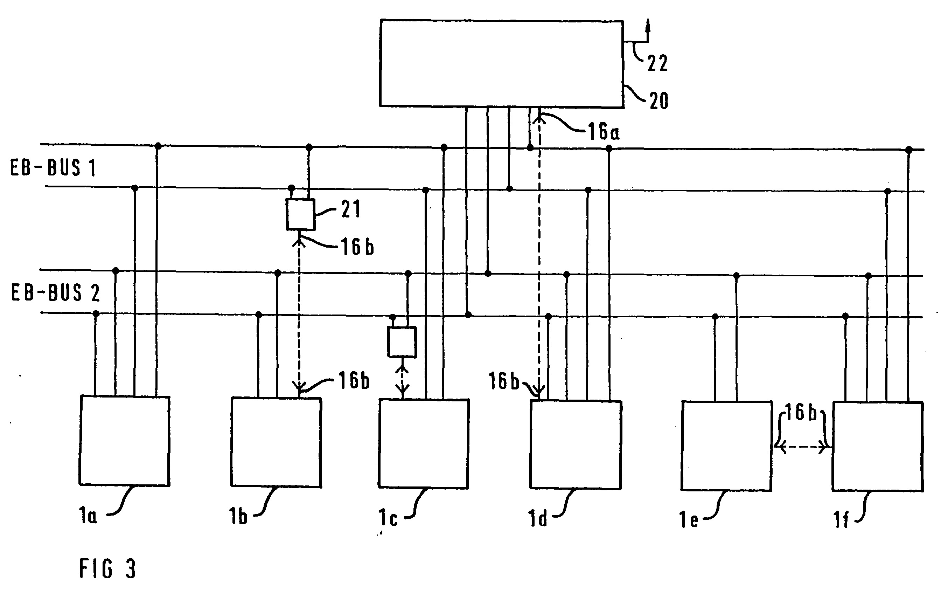

FIG 3 zeigt eine Schaltanlage in einer Prinzipdarstellung mit mehreren Schaltgeräten 1a bis 1f, die mit einer Zentrale 20 in Kontakt stehen. In dieser Prinzipdarstellung sind mehrere Übertragungsvarianten enthalten, die wahlweise alternativ, zusätzlich oder alternierend zur Anwendung kommen können.

In der gesamten Schaltanlage sind zunächst zwei Eigenbedarfssysteme - nachfolgend als Eigenbedarfsbus (EB-Bus 1 bzw. EB-Bus 2) bezeichnet - vorgesehen, mit denen die Zentrale 20 über entsprechende nicht näher bezeichnete Leitungen datentechnisch verbunden ist. Der EB-Bus 1 ist dabei als Wechselspannungsversorgung und der EB-Bus 2 als Gleichspannungsversorgung ausgeführt. Zusätzlich weist die Zentrale 20 ein Koppelelement 16a für eine zusätzlich drahtlose Informationsübertragung auf.

Die Zentrale 20 hat hier quasi die Funktion als Buscontroller. Zusätzlich kann sie gemäß dem Stand der Technik eine weitere Schnittstelle 22 für einen Informationsaustausch mit einer Leitzentrale oder einen übergeordneten Bus aufweisen.

Nachfolgend werden beispielhaft die jeweiligen Ausführungen der Schaltgeräte 1a bis 1f beschrieben, die von unterschiedlichen Informationswegen Gebrauch machen.

Das Schaltgerät 1a entspricht dem Schaltgerät 1a aus FIG 1 und ist demzufolge an EB-Bus 1 und EB-Bus 2 angekoppelt.

Schaltgerät 1b entspricht der einen alternativen Ausführungsform gemäß FIG 2, bei dem ein Übertragungsweg über den EB-Bus 2 gewählt ist. Zusätzlich ist mit dem Koppelelement 16b eine zweite Schnittstelle gegeben, die optional als redundanter Übertragungsweg dient.

Als Gegenstelle für das Koppelelement 16b dient vorliegend ein Koppelgerät 21, das als Umsetzer für die drahtlose Information auf die Informationsart auf dem EB-Bus 1 dient. Dieses Koppelelement 21 kann je nach Auslegung für ein oder zwei Informationsrichtungen ausgeführt sein. Die Art der drahtlosen Datenübertragung kann gemäß dem bereits oben erwähnten Beispielen gewählt werden.

Das Schaltgerät 1c entspricht im Prinzip der Ausführung von Schaltgerät 1b, wobei lediglich die Anbindungen an die verschiedenen Eigenbedarfssysteme vertauscht sind.

Das Schaltgerät 1d weist eine besonders sichere Kommunikationsverbindung auf, bei der eine Dreifachredundanz gegeben ist. Zunächst besteht hier wie bei Schaltgerät 1a eine direkte Ankopplung an EB-Bus 1 und EB-Bus 2. Zusätzlich ist eine dritte Schnittstelle mit dem Koppelelement 16b vorgesehen, das eine direkte Verbindung zu der Zentrale 20 ermöglicht. Hierbei ist selbstverständlich über den direkten Übertragungsweg eine schnelle Datenübertragung möglich, die für spezielle Einsatzzwecke, insbesondere für zeitrelevante Informationen, vorteilhaft ist. Ein spezieller Fall kann z.B. eine Schutzfunktion oder eine Meßwertübertragung sein.

Die Schaltgeräte 1e und 1f können in Kombination gesehen werden. Prinzipiell handelt es sich dabei um Schaltgeräte entsprechend den Ausführungen 1b bzw. 1d, wobei jedoch die Informationsübertragung über die Koppelelemente 16b zwischen den beiden Schaltgeräten 1e und 1f selbst erfolgt. Es wird hier also für das Schaltgerät 1e der redundante Übertragungsweg über das Schaltgerät 1f erzeugt. Zusätzlich ist hier auch ein direkter schneller Datenaustausch zwischen den Schaltgeräten 1e und 1f möglich.

Diese Ausführungsform kann z.B. auch in der gesamten Schaltanlage dafür verwendet werden, wenn ein Schaltgerät einen Fehler oder Übertragungsfehler feststellt und diesen als Information an die weiteren Schaltgeräte verteilt. Die Datenübertragung mit den Koppelelementen 16 bis 16b können im übrigen auch leitungsgebunden mit einem Lichtwellenleiter erfolgen, wozu ein Koppelelement auf optischer Basis zur Anwendung kommt.

Die aufgezeigte Kommunikation für die Schaltgeräte ist insbesondere im Hinblick auf einer Einsparung der bisherigen Parallelverdrahtung von Steuerleitungen von Interesse. Darüber hinaus kann die aufgezeigte Kommunikation auch als Ersatz und/oder als Ergänzung von bisherigen Übertragungssystemen genutzt werden.

Im Regelfall kommt in Schaltanlagen eine reine Gleichstrom-Eigenbedarfsversorgung zur Anwendung, bei der eine zusätzliche Redundanz mit einem zusätzlichen drahtlosen Übertragungssystem erzielt werden könnte. Im allgemeinen stehen in Schaltanlagen für die Eigenbedarfsversorgung jedoch zwei Spannungssysteme zur Verfügung, so daß für die Kommunikation ebenfalls in der Regel zwei Übertragungswege verwendet werden können.

Die Steuereinrichtung kann einen Überwachungs- und/oder Umschalteinrichtung aufweisen. Beispielhaft kann in einem einfachen Fall eine Einrichtung zur Spannungsüberwachung vorgesehen sein. Diese überwacht die Versorgungsspannung auf der einen Leitung, auf der zunächst der Datenverkehr und die Versorgung mit Energie erfolgt. Eine Überwachung auf folgende Fehlerfälle ist möglich:
- Versorgungsspannung fehlt (U = 0),
- Versorgungsspannung ungleich Sollspannung,
- Leiterkurzschluß gegen Erde und
- Iststrom größer als Sollstrom.

Beim Erkennen eines Spannungsfehlers wird in der Steuereinrichtung 11 eine Umschalteinrichtung aktiviert, die dann zumindest die Versorgung mit Energie auf die zweite Leitung umschaltet. Die Umschalteinrichtung kann auch gegebenenfalls unabhängig von einem Teilnehmer oder einem Zentralgerät die Überwachung vornehmen, wozu sie ggf. mit der Steuereinrichtung 11 eine autarke Einheit als selbständiges Gerät bildet.

Selbstverständlich können die Merkmale der aufgezeigten Ausführungen miteinander oder mit Merkmalen aus dem Stand der Technik (insbesondere der bereits obengenannten älteren Anmeldung) kombiniert werden, ohne daß der Grundgedanke der Erfindung verlassen wird. Wesentlich hierfür ist, daß ein einfaches Schaltgerät zur Verfügung steht, das zunächst ohne zusätzliche Steuerleitungen nur über seine eigene Hilfsspannungsversorgung in Kommunikationsverbindung mit einer Zentrale steht. Zusätzlich kann über ein weiteres Versorgungssystem ein redundanter Übertragungskanal geschaffen werden.

## Patentansprüche

1. Schaltgerät (1a bis 1f) für Hoch- oder Mittelspannung mit:
- einem Antriebsmittel (5), welches über ein Steuerglied (7) ansteuerbar ist und zur Betätigung eines Schalters (3) zum Schalten der Hoch- oder Mittelspannung dient,
- einer Heizeinrichtung (9), welche von einer ersten Eigenbedarfsleitung (12, 10) mit elektrischer Energie versorgt ist, und
- einer mit dem Steuerglied (7) verbundenen Steuereinrichtung (11), welche zum Ansteuern des Steuerglieds (7) dient und eine erste Schnittstelle für eine Busleitung aufweist,
wobei die Eigenbedarfsleitung (12, 10) gleichzeitig als Busleitung für die Informationsübertragung von oder zur Steuereinrichtung dient (FIG 1).

2. Schaltgerät nach Anspruch 1, wobei die Steuereinrichtung (11) eine zweite Schnittstelle für eine redundante Informationsübertragung aufweist.

3. Schaltgerät nach Anspruch 2, wobei die Steuereinrichtung (11) eine Überwachungs- und/oder Umschalteinrichtung zur Aktivierung einer Informationsübertragung mit einer der beiden Schnittstellen aufweist.

4. Schaltgerät nach Anspruch 2 oder 3, wobei die zweite Schnittstelle (18) zum Anschluß an eine elektrische Steuerleitung oder eine weitere als Busleitung dienende Eigenbedarfsleitung ausgebildet ist (FIG 2, 3).

5. Schaltgerät nach Anspruch 2 oder 3, wobei die zweite Schnittstelle (18) als optische Schnittstelle für eine optische Datenübertragung ausgebildet ist.

6. Schaltgerät nach Anspruch 2 oder 3, wobei die zweite Schnittstelle ein Koppelelement (16, 16a) für eine drahtlose Datenübertragung umfaßt.

7. Schaltgerät nach Anspruch 6, wobei das Koppelelement (16, 16a) als Funkantenne, Schall- oder Ultraschallkoppler ausgebildet ist.

8. Schaltgerät nach einem der Ansprüche 2 bis 7, wobei die Eigenbedarfsleitung/en und/oder die Steuer- oder Busleitung/en von einer Gleich- oder Wechselspannungsquelle (DC, AC) mit Energie versorgt ist/sind.

9. Schaltgerät nach einem der Ansprüche 1 bis 8, wobei die Steuereinrichtung (11) zusätzlich zumindest einen Meldeeingang (14) und/oder einen Steuerausgang aufweist.

10. Schaltgerät nach einem der Ansprüche 1 bis 9, wobei der Schalter (3) als Trennungs- oder Erdungsschalter ausgebildet ist.
